# FASCICULE DE BREVET EUROPEEN

(11) **EP 1 198 432 B1**
(45) Date de publication et mention de la délivrance du brevet: **10.10.2007**
(21) Numéro de dépôt: 00931352.9
(22) Date de dépôt: 25.05.2000
(51) Int. Cl.: C03C 17/32, C03C 17/34, C09K 3/18

(54) **VITRAGE TRANSPARENT ET SON UTILISATION DANS UNE PORTE D'ENCEINTE REFRIGEREE COMPORTANT NOTAMMENT UN VITRAGE SOUS-VIDE**
DURCHSICHTIGE VERGLASUNG UND IHRE VERWENDUNG IN EINER TÜR EINES GEKÜHLTEN RAUMES DIE INSBESONDERE EINE EVAKUIERTE VERGLASUNG ENTHÄLT
VITRAGE TRANSPARENT ET SON UTILISATION DANS UNE PORTE D'ENCEINTE REFRIGEREE COMPORTANT NOTAMMENT UN VITRAGE SOUS-VIDE

(30) Priorité: 25.05.1999 FR 9906586
(43) Date de publication de la demande: 24.04.2002
(73) Titulaire: SAINT-GOBAIN GLASS FRANCE, 92400 Courbevoie (FR)
(72) Inventeur: MESSERE, Rino, B-4577 Modave (BE); HEBERT, Anne-Sophie, F-60200 Compiegne (FR); FLORENTIN, Jean-Michel, F-02200 Soissons (FR)
(74) Mandataire: Muller, René
(86) Numéro de dépôt international: PCT/FR2000/001424
(87) Numéro de publication internationale: WO 2000/071481

(56) Documents cités:
- EP-A- 0 870 450
- EP-A- 0 908 500
- US-A- 4 767 671
- PATENT ABSTRACTS OF JAPAN vol. 1998, no. 11, 30 September 1998 (1998-09-30) -& JP 10 167764 A (MATSUMOTO AKIO), 23 June 1998 (1998-06-23)
- DATABASE WPI Section Ch, Week 198505 Derwent Publications Ltd., London, GB; Class A97, AN 1985-030582 XP002146044 & SU 1 101 444 A (LENGD RAIL TRANSP), 7 July 1984 (1984-07-07)
- DATABASE WPI Section Ch, Week 199022 Derwent Publications Ltd., London, GB; Class A18, AN 1990-168384 XP002146045 & JP 02 110119 A (MITSUI TOATSU CHEM INC), 23 April 1990 (1990-04-23)
- PATENT ABSTRACTS OF JAPAN vol. 013, no. 417 (C-636), 14 September 1989 (1989-09-14) & JP 01 156390 A (OJI KAKO KK), 19 June 1989 (1989-06-19)
- DATABASE WPI Section Ch, Week 197740 Derwent Publications Ltd., London, GB; Class A14, AN 1977-71183Y XP002146046 & JP 52 063186 A (SHIN NITTO KAGAKU), 25 May 1977 (1977-05-25)
- PATENT ABSTRACTS OF JAPAN vol. 008, no. 106 (C-223), 18 May 1984 (1984-05-18) & JP 59 021541 A (KATSUO SHIKAMATA), 3 February 1984 (1984-02-03)

## Description

L'invention concerne un vitrage transparent et son utilisation dans une porte d'enceinte réfrigérée et plus précisément une porte vitrée dont la zone vitrée est essentiellement constituée d'un vitrage sous vide.

L'invention sera plus particulièrement décrite en référence à des portes d'enceintes réfrigérées dans lesquelles sont exposées des produits froids ou congelés, mais elle ne doit pas être comprise comme se limitant à ce type de produits et d'applications. En effet, l'expression vitrage transparent énoncée ci-dessus vise tout type de vitrages constitués d'au moins une feuille de verre et/ou d'au moins une feuille d'un matériau plastique destinés à des applications pour l'automobile, pour le bâtiment, ou encore pour l'électroménager.

Lorsque des produits conservés dans une enceinte réfrigérée doivent rester visibles comme c'est le cas dans de nombreux locaux commerciaux actuels, on équipe l'enceinte réfrigérée de parties vitrées qui la transforment en une " vitrine " réfrigérée dont la dénomination commune est " meuble frigorifique de vente ". Il existe plusieurs variantes de ces " vitrines ". Certaines ont la forme d'armoire et alors, c'est la porte elle-même qui est transparente, d'autres constituent des coffres et c'est le couvercle horizontal qui est vitré pour permettre l'observation du contenu.

Dans ces types de présentoirs, il est nécessaire que les marchandises restent parfaitement visibles de la clientèle afin qu'il soit possible de présélectionner les marchandises sans ouvrir la " vitrine ".

Lorsque des vitrages isolants usuels sont utilisés, l'isolation n'est pas parfaite et la température de la surface de la feuille de verre se trouvant au contact de l'atmosphère ambiante est souvent inférieure à la température du point de rosée, ce qui peut conduire à un phénomène de condensation sur cette surface qui vient perturber la visibilité.

L'utilisation de vitrage isolant sous vide permet d'éliminer cet inconvénient en proposant une isolation très nettement renforcée. Une telle isolation présente également l'avantage d'améliorer les coûts énergétiques.

La demande de brevet française déposée au nom de SAINT-GOBAIN VITRAGE sous le numéro FR97/09772 décrit une telle porte d'enceinte réfrigérée comportant un vitrage sous vide. Elle propose ainsi une porte d'enceinte réfrigérée constituée essentiellement d'un panneau isolant composé d'au moins deux substrats en verre entre lesquels un vide a été réalisé, séparés l'un de l'autre par des plots répartis sur toute la surface et réunis à leur périphérie par un joint de scellage minéral. De cette manière, on substitue aux vitrages isolants classiques habituellement utilisés un vitrage isolant constitué d'au moins deux feuilles de verre entre lesquelles un vide a été réalisé que nous appellerons par la suite un vitrage isolant sous-vide. Ce type de vitrage isolant sous-vide présente pour une épaisseur totale nettement plus faible que celle des vitrages isolants classiques des propriétés d'isolation thermique nettement améliorées.

La structure d'un tel vitrage isolant sous-vide présente en outre l'avantage de lui conférer une rigidité et une tenue équivalentes à celles d'un vitrage monolithique d'épaisseur égale à la somme des épaisseurs des feuilles de verre, c'est-à-dire que les feuilles de verre se comportent comme une seule dont l'épaisseur est la somme de celle des deux feuilles de verre. De cette manière, il n'est pas nécessaire d'associer ce type de vitrage à un cadre support. Ainsi l'encombrement est fortement réduit et le montage dans l'enceinte climatique est très simple.

Une telle porte d'enceinte réfrigérée constituée essentiellement d'un vitrage isolant sous-vide permet de résoudre le phénomène de condensation sur la surface extérieure ; en effet, l'isolation thermique de ce vitrage permet d'obtenir une surface extérieure à la température de l'environnement.

Par contre, cette isolation renforcée fait que la surface intérieure du vitrage ou de la porte est à la température de l'ambiance réfrigérée, ce qui accentue le phénomène de condensation lors de l'ouverture de la porte ; la température de la surface intérieure est telle que dans le cas d'armoires de congélation, on peut observer une formation de givre sur ladite surface.

<->

Les techniques habituelles pour éliminer la condensation et/ou le givre qui se forme sur la surface intérieure des portes consistent à souffler un air chauffé le long de cette surface. Quelle que soit la technique utilisée, le coût énergétique est élevé, ceci est encore plus pénalisant dans le cas d'un vitrage isolant sous-vide, le temps pour éliminer la condensation et/ou le givre étant plus important. D'autre part, cet allongement du temps dû à la température très basse de la face intérieure est contraire au but recherché qui consiste à obtenir une zone de visibilité quasi-permanente, y compris après une ouverture de la porte.

L'invention a ainsi notamment pour but la réalisation d'une porte d'enceinte réfrigérée comportant une zone vitrée constituée d'un vitrage isolant, selon laquelle, le givre susceptible de se former sur la zone de visibilité en cas d'ouverture de la porte peut être éliminée rapidement et à moindres coûts.

- Ce but est atteint par l'invention telle que définie dans les revendications.

La fonction anti-givre de la couche signifie que celle-ci inhibe la formation de cristaux d'eau.

Le document US-A-4 767 671 décrit une couche formée d'un polyuréthane hydrophile ayant des propriétés anti-buée par des substrats transparents

Un tel vitrage notamment lorsqu'il s'agit d'un vitrage isolant et plus particulièrement d'un vitrage isolant sous-vide peut être utilisé dans une porte d'enceinte réfrigérée comportant au moins une zone de visibilité constituée par exemple dudit vitrage isolant sous vide associée à une couche adsorbante déposée avantageusement sur la surface, de ladite zone de visibilité, au contact de l'ambiance réfrigérée.

Il est apparu qu'une telle porte comportant le vitrage selon l'invention permet d'éviter le phénomène de givre, ou plus exactement de le retarder, et tout au moins de limiter son apparition.

Selon un premier mode de réalisation, la couche adsorbante anti-givre est déposée directement sur le verre, et plus précisément sur la surface du vitrage isolant sous vide au contact de l'ambiance réfrigérée. Il s'agit de la surface au contact de l'ambiance réfrigérée lorsque la porte est dans sa position fermée. Une telle couche peut être déposée par des techniques du type pulvérisation ou par enduction, notamment du type " flow-coating " ou " deep-coating ", le dépôt intervenant avant ou après fabrication du vitrage sous vide. Avantageusement, un primaire d'adhésion du type silane est prévu ; il est soit préalablement déposé sur le verre, soit simultanément à la formation de la couche, les silanes étant introduits dans la composition de la couche adsorbante anti-givre.

Selon un second mode de réalisation, la couche adsorbante anti-givre est déposée, par exemple selon l'une des méthodes précédemment citées, sur un film plastique et le film plastique est lui-même fixé au vitrage isolant sous vide. Le film plastique utilisé est avantageusement un film polycarbonate présentant une épaisseur de préférence inférieure à 3 millimètres ; celui-ci est notamment choisi pour ses propriétés de tenue mécanique. La fixation du film plastique sur le vitrage est réalisée de manière étanche de sorte qu'aucune trace d'humidité ne puisse être présente entre la surface de verre et le film plastique. La fixation peut par exemple être obtenue par un collage périphérique ; la lame d'air pouvant exister entre le verre et le film plastique ne doit alors avantageusement pas excéder 3 mm. La fixation peut encore être obtenue par l'intermédiaire d'un cadre aluminium associé à un dessicant et une colle, semblable à celui d'un vitrage isolant selon une réalisation classique ; la lame d'air entre le verre et le film plastique n'excède alors avantageusement pas 10 mm.

Selon une réalisation avantageuse de l'invention, la couche adsorbante anti-givre est constituée d'au moins un polymère hydrophile. Un tel polymère peut être choisi de manière non limitative parmi les polymères suivants : une polyvinylpyrrolidone du type poly (n-vinyl-2 pyrrolidone) ou poly (1-vinyl pyrrolidone), une polyvinylpyrridine du type poly (n-vinyl-2 pyrridine), du type poly (n-vinyl-3-pyrridine), du type poly (n-vinyl-4-pyrridine), un polyacrylate du type poly (2-hydroxyethylacrylate), une polyacrylamide du type poly (N',N-Hydroxyacrylamide), un polyvinylacétate, un polyacrylonitrile, un polyvinylalcool, une polyacroléine, un polyéthylène glycol, un polyoxyéthylène. Il peut encore s'agir d'un copolymère à base de deux ou plusieurs polymères cités ci-dessus.

De préférence, l'invention prévoit que la couche est constituée d'au moins un polymère hydrophile réticulé. La réticulation du polymère permet notamment de conduire à une meilleure cohésion de la couche et d'éviter ainsi des risques de dissolution de la couche par l'eau, à plus ou moins longs termes.

Selon une réalisation préférée de l'invention, le polymère hydrophile est combiné à un matériau absorbant organique ou inorganique, ledit matériau absorbant étant de préférence poreux.

Un matériau absorbant inorganique améliore notamment la résistance mécanique de la couche et plus particulièrement prévient la formation de rayures. La fonction inorganique est avantageusement obtenue par dépôt d'un matériaux mésoporeux (CPG-MCM 41), tel que des nanoparticules de TiO₂, ou par dépôt de produits de condensation d'hydrolyse d'orthosilicate, ou d'autres dérivés du silicium.

Un matériau absorbant organique autorise notamment la rétention du polymère hydrophile ; on utilise par exemple un polyuréthanne.

Les inventeurs ont ainsi su mettre en évidence que la présence d'une couche poreuse comportant un polymère hydrophile en surface de la zone vitrée permet une adsorption de l'eau. Ce principe évite la formation de gouttelettes d'eau et ainsi d'un film susceptible de givrer et de perturber la vision au travers de la zone vitrée. Le choix du polymère hydrophile et de la porosité dans le cas d'un matériau absorbant poreux permettent de contrôler le comportement anti-givre de la couche. L'augmentation de la porosité permet notamment de régler la vitesse et la capacité d'adsorption en eau ainsi que le niveau de l'eau en micro-gouttelettes.

Selon une réalisation préférée de l'invention, la porosité de la couche est comprise entre 0,1 et 1000 cm³/g. Dans le cas d'un matériaux polymérique, elle est avantageusement comprise entre 0,1 et 100 cm³/g et de préférence inférieure à 20 cm³/g. Elle est de préférence comprise entre 200 et 1000 cm³/gr dans le cas d'un matériaux mésoporeux. La porosité définit le volume de vide des pores par unité de masse de la couche.

De préférence encore, la couche présente des pores dont le diamètre moyen est compris entre 0,05 et 50 microns, de préférence entre 0,1 et 20 microns et de préférence encore entre 1 et 15 microns. La forme des cavités constituants les pores sont ovales ou sphériques.

Quelle que soit la nature de la couche adsorbante anti-givre et la méthode de réalisation de celle-ci, elle présente avantageusement une épaisseur inférieure à 100 microns, de préférence inférieure à 50 microns, de préférence encore inférieure à 35 microns et dans certains cas de préférence inférieure à 25 microns et de préférence encore inférieure à 20 microns.

D'autres détails et caractéristiques avantageuses de l'invention ressortiront ci-après de la description d'exemples de réalisation de l'invention et d'essais réalisés.

Telle que décrit précédemment, une porte d'un meuble frigorifique de vente a été réalisée. Elle est constituée notamment d'un vitrage isolant sous-vide pour constituer la zone de visibilité et d'un cadre de porte, par exemple métallique. Ce cadre peut notamment supporter tous les systèmes mécaniques du type poignée, charnières ainsi que les joints conservant l'étanchéité avec les parois de l'enceinte réfrigérée.

Le vitrage isolant est constitué de deux feuilles de verre entre lesquelles un vide a été réalisé. Les feuilles de verre sont séparées l'une de l'autre par des plots répartis sur toute la surface du vitrage et réunies à leur périphérie par un joint de collage minéral. Un tel vitrage isolant sous-vide est par exemple réalisé selon une technique telle que celle décrite dans la demande de brevet EP 645 516.

Selon l'invention, on fixe sur le vitrage isolant sous vide un film polycarbonate d'une épaisseur de 2 millimètres à l'aide d'une colle formant un ruban à la périphérie du vitrage d'une épaisseur de 1 millimètre. On forme ainsi un caisson d'air entre le vitrage et le film polycarbonate parfaitement étanche. La réalisation de ce complexe est faite de sorte que l'air emprisonné soit sec. Le film est fixé du côté du vitrage isolant sous vide, destiné à être orienté au sein de l'enceinte réfrigérée lorsque la porte est dans sa position fermée.

Préalablement à sa fixation, le film polycarbonate est revêtue d'une couche adsorbante anti-givre, celle-ci étant déposée de façon à être orientée vers l'intérieur de l'enceinte réfrigérée lorsque la porte est en position fermée. La couche ainsi déposée forme un réseau tridimensionnel poreux polymérique, à base de polyvinylpyrrolidone et de polyuréthanne.

Des mesures de la couche à l'état humide ont été effectuées par microscopie à transmission électronique ; ces mesures permettent de contrôler l'épaisseur de la couche et la dimension des pores. L'épaisseur de la couche est égale à 14,5 microns et les pores présentent un diamètre moyen variant de 1 à 8 microns.

Des essais ont été réalisés sur différents types de portes. Ces portes sont installées sur des meubles de vente frigorifiques au sein desquels une température de -28°C est maintenue. Les meubles sont eux placés dans une atmosphère à une température de 25°C. Les essais consistent à effectuer des ouvertures de porte d'une durée de 3 minutes et d'une durée de 12 secondes. La durée de 3 minutes simule le temps moyen nécessaire au chargement matinal de ce type de meuble. La durée de 12 secondes simule le temps moyen nécessaire au consommateur pour prendre un ou plusieurs produits.

Les résultats mesurés sont les temps nécessaires pour revenir à une visibilité satisfaisante au travers de la porte, c'est-à-dire les temps nécessaires pour éliminer la condensation et/ou le givre.

La première porte A testée comporte un vitrage isolant constitué de trois feuilles de verre.

La seconde porte B testée comporte un vitrage isolant sous-vide.

La troisième porte C est celle selon l'invention qui vient d'être décrite.

Les résultats sont présentés dans le tableau ci-après :

| | Ouverture 3 min | Ouverture 12 s |
|---|---|---|
| A | 8 min 20 s | 1 min 15 s |
| B | 31 min 10 s | 1 min 40 s |
| C | 0 s | 0 s |

Il apparaît clairement au vu de ces résultats que la porte C, réalisée selon l'invention, permet d'éviter la formation de givre.

Un autre essai a été réalisé dans des conditions similaires. Seule la nature de la couche diffère dans ce second exemple. Ce second exemple a consisté à déposer une couche constituée uniquement d'un polymère hydrophile ; Ce polymère hydrophile a été réalisé à base de polyvinylpyrrolidone, d'une masse moléculaire de 1 300 000 g/mol, diluée à 10% en masse dans de l'éthanol. La composition ainsi obtenue a ensuite été déposée par enduction (flow-coating) sur le verre.

Des essais tels que décrits précédemment consistant en des ouvertures de porte d'une durée de 12 secondes et 3 minutes ont été réalisés. Dans les deux cas, il n'est apparu aucune trace de givre sur la zone de visibilité de la porte.

La présence de la couche adsorbante, permet donc d'éviter la formation de givre lors d'une ouverture de la porte dans des conditions normales d'utilisation.

## Revendications

1. Utilisation d'un vitrage isolant dans une porte d'enceinte réfrigérée, **caractérisée en ce que** le vitrage isolant comporte au moins une zone de visibilité associée à une couche poreuse adsorbante présentant une épaisseur inférieure à 100 microns, comportant - un polymère hydrophile et un matériau mésoporeux en tant que matériau absorbant inorganique, - ou un polymère hydrophile et un matériau absorbant organique ou inorganique et présente des pores dont le diamètre est compris entre 0,05 et 50 microns - , ladite couche étant déposée sur au moins une surface de ladite zone au contact de l'ambiance réfrigérée et ladite couche permettant d'éviter le phénomène de givre dans cette zone de visibilité.

2. Utilisation selon la revendication 1 **caractérisée en ce que** la couche est déposée sur la surface du vitrage.

3. Utilisation selon la revendication 1 **caractérisée en ce que** la couche est déposée sur un film plastique et **en ce que** le film plastique est fixé au vitrage.

4. Utilisation selon une des revendications 1 à 3, **caractérisée en ce que** le polymère hydrophile est réticulé.

5. Utilisation selon l'une des revendications 1 à 4, **caractérisée en ce que** le polymère hydrophile est un polymère ou copolymère de polyvinylpyrrolidone.

6. Utilisation selon la revendication 1 à 4, **caractérisée en ce que** le polymère hydrophile est un polymère ou copolymère de polyéthylène glycol.

7. Utilisation selon l'une des revendications précédentes **caractérisée en ce que** la couche présente une porosité comprise entre 0,1 et 1000 cm³/g.

8. Utilisation selon l'une des revendications précédentes **caractérisée en ce que** la couche comprend un matériau mésoporeux ou présente des pores dont le diamètre est compris entre 0,05 et 50 microns., de préférence entre 0,1 et 20 microns et de préférence encore entre 1 et 15 microns.

9. Utilisation selon l'une des revendications précédentes **caractérisée en ce que** la couche adsorbante anti-givre présente une épaisseur inférieure à 50 microns.

10. Utilisation selon l'une des revendications 1 à 10, **caractérisée en ce que** le vitrage isolant est un vitrage sous-vide.

11. Porte d'enceinte réfrigérée comprenant un vitrage isolant **caractérisée en ce que** celui-ci comporte au moins une zone de visibilité associée à une couche poreuse adsorbante présentant une épaisseur inférieure à 100 microns, comportant - un polymère hydrophile et un matériau mésoporeux en tant que matériau absorbant inorganique, - ou un polymère hydrophile et un matériau absorbant organique ou inorganique et présente des pores dont le diamètre est compris entre 0,05 et 50 microns -, ladite couche étant déposée sur au moins une surface de ladite zone au contact de l'ambiance réfrigérée et ladite couche permettant d'éviter le phénomène de givre dans cette zone de visibilité.

## Claims

1. Use of insulating glazing in a door of a refrigerated enclosure, **characterized in that** the insulating glazing includes at least one viewing area associated with an adsorbent porous layer having a thickness of less than 100 microns, comprising a hydrophilic polymer and a mesoporous material as inorganic absorbent material, or a hydrophilic polymer and an organic or inorganic absorbent material, and has pores, the diameter of which is between 0.05 and 50 microns, said layer being deposited on at least one surface of said area in contact with the refrigerated environment, and said layer making it possible to prevent the phenomenon of icing in this viewing area.

2. Use according to Claim 1, **characterized in that** the layer is deposited on the surface of the glazing.

3. Use according to Claim 1, **characterized in that** the layer is deposited on a plastic film and **in that** the plastic film is fastened to the glazing.

4. Use according to one of Claims 1 to 3, **characterized in that** the hydrophilic polymer is crosslinked.

5. Use according to one of Claims 1 to 4, **characterized in that** the hydrophilic polymer is a polymer or copolymer of polyvinylpyrrolidone.

6. Use according to Claim 1 to 4, **characterized in that** the hydrophilic polymer is a polymer or copolymer of polyethylene glycol.

7. Use according to one of the preceding claims, **characterized in that** the layer has a porosity of between 0.1 and 1000 cm³/g.

8. Use according to one of the preceding claims, **characterized in that** the layer comprises a mesoporous material or has pores whose diameter is between 0.05 and 50 microns, preferably between 0.1 and 20 microns and more preferably between 1 and 15 microns.

9. Use according to one of the preceding claims, **characterized in that** the antifrosting adsorbent layer has a thickness of less than 50 microns.

10. Use according to one of Claims 1 to 10, **characterized in that** the insulating glazing is a vacuum glazing unit.

11. Refrigerated enclosure door comprising insulating glazing, **characterized in that** the insulating glazing includes at least one viewing area associated with an adsorbent porous layer having a thickness of less than 100 microns, comprising a hydrophilic polymer and a mesoporous material as inorganic absorbent material, or a hydrophilic polymer and an organic or inorganic absorbent material, and has pores, the diameter of which is between 0.05 and 50 microns, said layer being deposited on at least one surface of said area in contact with the refrigerated environment, and said layer making it possible to prevent the phenomenon of icing in this viewing area.

## Patentansprüche

1. Verwendung eines Isolierglases in einer Kühlbehältertür, **dadurch gekennzeichnet, dass** das Isolierglas mindestens einen Sichtbereich enthält, der mit einer porösen Adsorptionsschicht versehen ist, die eine Dicke von weniger als 100 Mikrometer aufweist, ein hydrophiles Polymer und ein mesoporöses Material als anorganisches Absorptionsmaterial oder ein hydrophiles Polymer und ein organisches oder anorganisches Absorptionsmaterial umfasst und Poren aufweist, deren Durchmesser 0,05 bis 50 Mikrometer beträgt, wobei die Schicht auf wenigstens der Fläche dieses Bereichs, die sich mit der gekühlten Umgebung in Berührung befindet, aufgebracht ist und es erlaubt, die Bereifung des Sichtbereichs zu verhindern.

2. Verwendung nach Anspruch 1, **dadurch gekennzeichnet, dass** die Schicht auf der Oberfläche des Glases aufgebracht ist.

3. Verwendung nach Anspruch 1, **dadurch gekennzeichnet, dass** die Schicht auf einer Kunststofffolie aufgebracht worden ist, und dass die Kunststofffolie auf dem Glas befestigt ist.

4. Verwendung nach einem der Ansprüche 1 bis 3, **dadurch gekennzeichnet, dass** das hydrophile Polymer vernetzt ist.

5. Verwendung nach einem der Ansprüche 1 bis 4, **dadurch gekennzeichnet, dass** das hydrophile Polymer ein Polyvinylpyrrolidonpolymer oder -copolymer ist.

6. Verwendung nach dem Anspruch 1 bis 4, **dadurch gekennzeichnet, dass** das hydrophile Polymer ein Polyethylenglykolpolymer oder -copolymer ist.

7. Verwendung nach einem der vorhergehenden Ansprüche, **dadurch gekennzeichnet, dass** die Porosität der Schicht 0,1 bis 1000 cm³/g beträgt.

8. Verwendung nach einem der vorhergehenden Ansprüche, **dadurch gekennzeichnet, dass** die Schicht ein mesoporöses Material umfasst oder Poren aufweist, deren Durchmesser 0,05 bis 50 Mikrometer, vorzugsweise zwischen 0,1 und 20 Mikrometer, und besonders bevorzugt zwischen 1 und 15 Mikrometer beträgt.

9. Verwendung nach einem der vorhergehenden Ansprüche, **dadurch gekennzeichnet, dass** die Dicke der die Bereifung verhindernden Adsorptionsschicht weniger als 50 Mikrometer beträgt.

10. Verwendung nach einem der Ansprüche 1 bis 10, **dadurch gekennzeichnet, dass** das Isolierglas ein Vakuumisolierglas ist.

11. Kühlbehältertür, die ein Isolierglas umfasst, **dadurch gekennzeichnet, dass** dieses mindestens einen Sichtbereich enthält, der mit einer porösen Adsorptionsschicht versehen ist, die eine Dicke von weniger als 100 Mikrometer aufweist, ein hydrophiles Polymer und ein mesoporöses Material als anorganisches Absorptionsmaterial oder ein hydrophiles Polymer und ein organisches oder anorganisches Absorptionsmaterial umfasst und Poren aufweist, deren Durchmesser 0,05 bis 50 Mikrometer beträgt, wobei die Schicht auf wenigstens der Fläche dieses Bereichs, die sich mit der gekühlten Umgebung in Berührung befindet, aufgebracht ist und es erlaubt, die Bereifung des Sichtbereichs zu verhindern.
